# EUROPÄISCHE PATENTSCHRIFT

(11) **EP 1 091 510 B1**
(45) Veröffentlichungstag und Bekanntmachung des Hinweises auf die Patenterteilung: **25.05.2005**
(21) Anmeldenummer: 00121680.3
(22) Anmeldetag: 04.10.2000
(51) Int. Cl.: H04B 17/00

(54) **Koppelfeld für Hochfrequenzsignale**
Connection network for high frequency signals
Réseau de connexion pour des signaux à haute fréquence

(30) Priorität: 04.10.1999 DE 19947654
(43) Veröffentlichungstag der Anmeldung: 11.04.2001
(73) Patentinhaber: T-Mobile Deutschland GmbH, 53227 Bonn (DE); MTS Systemtechnik GmbH, 86609 Donauwörth (DE)
(72) Erfinder: Bremer, Hans, 86663 Asbach-Bäumenheim (DE); Burggraf, Reiner, 53844 Toisdorf (DE); Kreuz, Wolfgang, 53123 Bonn (DE); Reinert, Jürgen, 53111 Bonn (DE)
(74) Vertreter: Riebling, Peter, Dr.-Ing.

(56) Entgegenhaltungen:
- US-A- 5 191 594
- US-A- 5 465 393
- US-A- 5 862 455

## Beschreibung

Die Erfindung betrifft ein Koppelfeld zur Vermittlung wenigstens eines Hochfrequenzsignals zwischen wenigstens einem Sende-/Empfangsgerät und wenigstens einem weiteren Sende-/Empfangsgerät nach dem Oberbegriff des Patentanspruchs 1.

Ein derartiges Koppelfeld stellt eine Funkfeldnachbildung, insbesondere für den Mobilfunkbereich dar und dient zur Feldsimulation für den Test von Mobilfunkequipment, wie Sende- und Empfangsgeräte von Mobilfunk-Basisstationen und Mobilfunkendgeräten.

Bisher wurden Feldsimulationen mit diskret für den jeweiligen Anwendungsfall aufgebauten Koppelfeldern realisiert, wobei insbesondere beim Test von sogenannten Dualband-Mobilfunkendgeräten, die sowohl im GSM (900 MHz) als auch im DCS-Frequenzband (1800 MHz) arbeiten ein hoher Verschaltungsaufwand nötig war. Dabei war die Bedienbarkeit der diskret aufgebauten Koppelfelder wenig benutzerfreundlich. Zur Simulation der Dämpfung der Funksignale wurden als Abschwächer verschaltete Koaxial-Relais verwendet, die einerseits eine gewisse Schaltzeit und andererseits nur eine begrenzte Lebensdauer aufweisen.
Ferner ergab sich beim Umschalten von einem Dämpfungswert auf einen anderen eine gewisse Austastzeit des Funksignals, was die Messungen erschwerte.

Mit den Merkmalen des Oberbegriffs des Anspruchs 1 offenbart die Druckschrift US 5,465,393 ein Simulations-Sendeschnittstellensystem, welches wiederholend eine Konstante simuliert, jedoch in frei variabler Umgebung. In dem System ist eine Vielzahl mobiler Stationen mit mindestens einer Basisstation über Kabel verbunden. Das System teilt den Funkweg jeder Antenne der Mobilstationen in ein Empfangs-Verbindungsfeld und ein Sende-Verbindungsfeld auf, so dass die Frequenzeinstellung und die Signalreflektion nicht in das System übertragen werden. Die Zustände der simulationsfreien Sendeumgebung können durch das Einbringen von Dämpfung variieren, Doppler-Verschiebungen und Signal nehmen in dem System ab.
Diese Erfindung hat den Nachteil, dass das vorbenannte System die verschiedenen Prüfszenarien nur durch erhöhten Verschaltungsaufwand realisieren kann.

Der Erfindung liegt die Aufgabe zugrunde, ein Koppelfeld der eingangs genannten Art hinsichtlich der Funktionalität und Handhabbarkeit zu verbessern.

Diese Aufgabe wird erfindungsgemäß durch die im unabhängigen Patentanspruch angegebenen Merkmale gelöst.

Danach umfasst das Koppelfeld eine erste Koppelstufe mit wenigstens zwei gleichartigen Koppelmodulen zum Anschluß wenigstens eines Sende-/Empfangsgeräts, wobei die Koppelmodule jeweils einen Leistungsteiler und wenigstens einen festen oder variablen Signalabschwächer und Ausgänge aufweisen, an denen das ungedämpfte Eingangssignal und wenigstens ein abgeschwächtes Eingangssignal zur Verfügung stehen,
eine zweite Koppelstufe mit wenigstens einem Koppelmodul, welches wenigstens zwei Eingänge mit jeweils einem nachgeschalteten Stufenabschwächer und einen Leistungsteiler aufweist, der die Ausgänge der Stufenabschwächer zu einem gemeinsamen Ausgangssignal zusammenfasst, und
eine dritte Koppelstufe mit wenigstens einem Koppelmodul, welches einen Vierpol-Hybridkoppler mit zwei Eingängen und zwei Ausgängen umfasst, wobei die Ausgänge vorgeschaltete Signalabschwächer aufweisen und wobei an den Ausgängen mindestens das weitere Sende-/Empfangsgerät anschließbar ist,
   wobei die Eingänge der zweiten und dritten Koppelstufe über Steckbrücken und/oder Verbindungskabel mit den Ausgängen der ersten und zweiten Koppelstufe beliebig miteinander verbindbar sind.

Mit der Erfindung wird der Vorteil erreicht, daß verschiedenste Prüfszenarien ohne grossen Verschaltungsaufwand realisiert werden können. Die notwendigen Koppelmodule müssen lediglich durch Steckbrücken oder Steckverbindungen in gewünschter Weise miteinander verbunden werden. Es wird demnach ein hoher Bedienkomfort erreicht. Vorteilhaft sind die Eingänge und Ausgänge der Koppelmodule auf an der Front- und/oder Rückwand des Gehäuses angeordnete Verbindungsbuchsen geführt.
Durch Einbau in ein Standardgehäuse, z.B. 19" Gehäuse, lässt sich das Koppelfeld leicht transportieren und überall einsetzen.

Um die Verschaltungs- und Kombinationsmöglichkeiten zwischen den Koppelmodulen zu erhöhen ist in einer bevorzugten Ausführungsform der Erfindung vorgesehen, das Koppelfeld mit einem weiteren frei verschaltbaren Vierpol-Hybridkoppler mit zwei Eingängen und zwei Ausgängen auszurüsten, wobei die Ausgänge der zweiten Koppelstufe über den Hybridkoppler mit den Eingängen der dritten Koppelstufe beliebig verbindbar sind.

Kurze Schaltzeiten der Stufenabschwächer sowie eine lange Lebensdauer im Vergleich zu Relaisschaltstufen lassen sich gemäß einer Ausführungsform der Erfindung dadurch erzielen, daß der Stufenabschwächer aus Halbleiterbauelementen besteht. Halbleiterabschwächer ermöglichen außerdem ein unterbrechungsfreies Schalten, d.h. das Signal wird während des Schaltens nicht ausgetastet. Dies ist insbesondere bei der Durchführung von Meßreihen vorteilhaft. Ein weiterer Vorteil von Halbleiterbausteinen ist die dadurch erzielbare geringe Gesamt-Einfügedämpfung von typisch 17 bis 25 dB je nach Verschaltung der Koppelmodule. Somit können auch Signale von sehr schwachen Signalquellen verarbeitet werden.

Eine weitere bevorzugte Ausführungsform der Erfindung sieht vor, daß die Dämpfungswerte der Stufenabschwächer direkt über ein am Gehäuse angebrachtes Tastenfeld einstellbar und/oder stufenweise veränderbar sind. Dies trägt zur Erhöhung des Bedienkomforts bei. Durch eine entsprechende Anzeigevorrichtung kann die eingestellte Dämpfung dem Bediener direkt angezeigt werden.

Erfindungsgemäß ist das Koppelfeld für einen Frequenzbereich von ca. 800-2500 MHz ausgelegt. Dieser große Frequenzbereich wird durch den Einsatz modernster Halbleiterbauelemete erreicht. Dadurch wird erstmals ein Test von Dualband- oder Triband-Mobilfunkendgeräten möglich, die im 900, 1800 bzw. 2200 MHz Bereich arbeiten.

Eine Weiterbildung der Erfindung sieht vor, daß an den Eingängen oder Ausgängen der ersten Koppelstufe Signalpegelanzeigeeinrichtungen angeordnet sind, die im einfachsten und bevorzugten Fall ein HF-Koppelglied, einen HF-Gleichrichter und eine Komparator- oder Schwellwertschaltung mit wenigstens einem optischem Anzeigeelement für den Signalpegel umfassen. Dadurch lässt sich der Ausgang mit dem optimalen Pegel, der auf die nachfolgenden Koppelstufen geführt wird, einfach bestimmen.

Nachfolgend wird die Erfindung anhand eines Ausführungsbeispiels unter Bezugnahme auf zwei Zeichnungsfiguren näher beschrieben. Dabei gehen aus den Zeichnungen und ihrer Beschreibung weitere Merkmale und Vorteile der Erfindung hervor. Es zeigen:
- Figur 1:: das Schaltbild einer bevorzugten Ausführung des Koppelfelds;
- Figur 2:: Zusammenschaltung der Koppelmodule für eine Testverbindung zwischen einem Mobilfunkendgerät und vier Basisstationen;
- Figur 3:: Schaltungsanordnung zur Signalpegelauswertung.

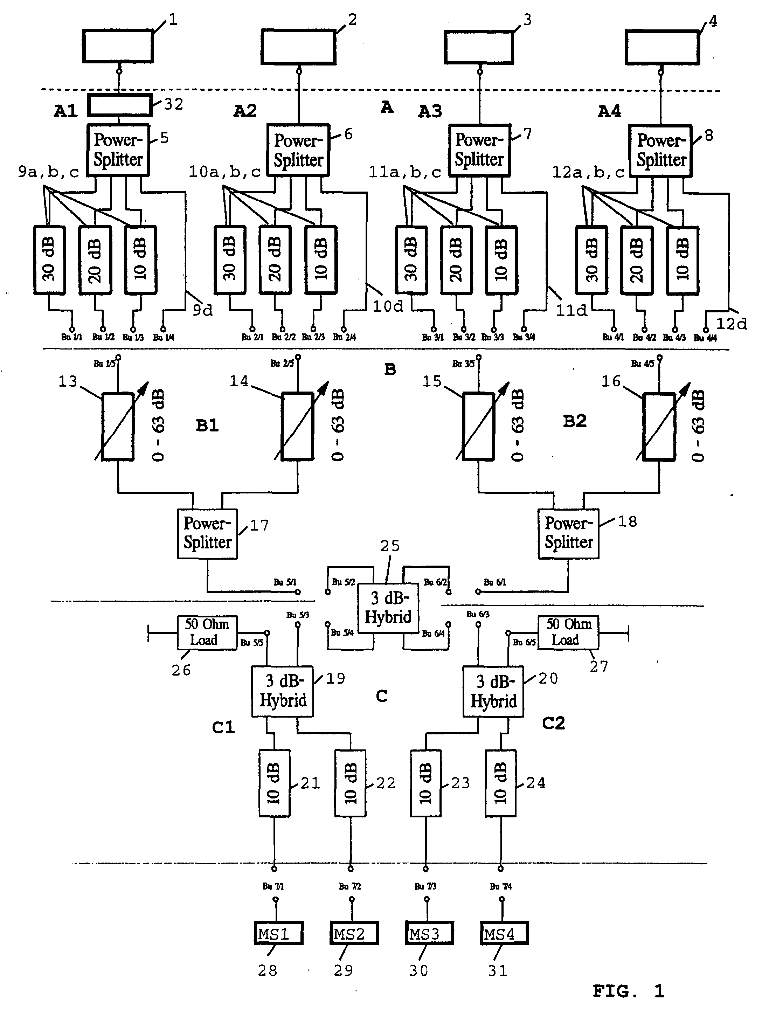

In Figur 1 ist das Schaltbild einer bevorzugten Ausführung des Koppelfelds dargestellt. Das erfindungsgemäße Koppelfeld ist als passives System ausgeführt, so daß eine bidirektionale Nutzung möglich ist, d.h. jeder im folgenden beschriebene Signaleingang kann auch ein Signalausgang sein und jeder beschriebene Signalausgang als Signaleingang verwendet werden.

Man erkennt die drei wesentlichen Koppelstufen A, B und C. Die Koppelstufe A umfasst beispielsweise vier identische Koppelmodule A1 bis A4, die Koppelstufe B umfasst zwei identische Koppelmodule B1, B2 und die Koppelstufe C ebenfalls zwei identische Koppelmodule C1, C2.

Am Eingang jedes Koppelmoduls A1-A4 kann ein Sende-/Empfangsgerät, in diesem Fall eine Basisstation 1-4 (BTS) des Mobilfunknetzes, angeschlossen werden. Das Signal der Basisstationen 1-4 wird jeweils von einem Leistungsteiler 5-8 in vier Signalzweige geteilt, wobei ein Signalzweig direkt an einen Ausgang, z.B. Bu 1/4 jedes Koppelmoduls A1-A4 geführt wird. Den anderen drei Signalzweigen werden Signalabschwächer 9a-9c, 10a-10c, 11a-11c, 12a-12c nachgeschaltet, die das Signal um 10 dB, 20 dB oder 30 dB dämpfen. Die verschieden stark abschwächten Signale werden an jeweils einen Ausgang, z.B. Bu 1/1 bis Bu 1/3 usw. geführt.

Die Koppelmodule B1, B2 der zweiten Koppelstufe umfassen jeweils zwei Eingänge Bu 1/5, Bu 2/5 bzw. Bu 3/5, Bu 4/5 und einen jedem Eingang nachgeschalteten Stufenabschwächer 13, 14 bzw. 15, 16, der aus Halbleitermaterial aufgebaut ist. Die Stufenabschwächer haben z.B. einen Regelbereich von 0-63 dB in Schritten von 1 dB. Die Ausgangssignale der Stufenabschwächer 13, 14 bzw. 15, 16 werden über einen Leistungsteiler 17 bzw. 18 zusammengeführt und stehen an jeweils einem Ausgang 5/1 bzw. 6/1 der Module B1, B2 zur Verfügung. Die Regelung der Dämpfung pro Abschwächer erfolgt über ein Tastenfeld auf der Frontplatte des Geräts.

Die Koppelmodule C1 und C2 der dritten Koppelstufe umfassen jeweils einen Vierpol-Hybridkoppler 19 bzw. 20 mit jeweils 2 Eingängen 5/5, 5/3 bzw. 6/5, 6/3 und zwei Ausgängen. Die Ausgänge der Hybridkoppler 19, 20 werden über jeweils einen Abschwächer 21, 22 bzw. 23, 24 an die Ausgänge Bu 7/1, Bu 7/2 bzw. Bu 7/3, Bu 7/4 der Koppelmodule C1, C2 geführt. Die Abschwächer haben beispielsweise einen Dämpfungswert von 10 dB. An jedem Ausgang kann ein weiteres Sende-/Empfangsgerät, z.B. in Form eines Mobilfunkendgeräts 28-31, angeschlossen werden. Zur freien Verschaltung mit den Hybridkopplem 19, 20 sind zwei Leitungsabschlüsse 26, 27 in Form von 50 Ohm Lasten vorgesehen.

Um die Verschaltungs- und Kombinationsmöglichkeiten zwischen den Koppelmodulen B und C zu erhöhen ist das Koppelfeld mit einem weiteren frei verschaltbaren Vierpol-Hybridkoppler 25 mit zwei Eingängen Bu 5/2; Bu 6/2 und zwei Ausgängen Bu 5/4; Bu 6/4 ausgerüstet.

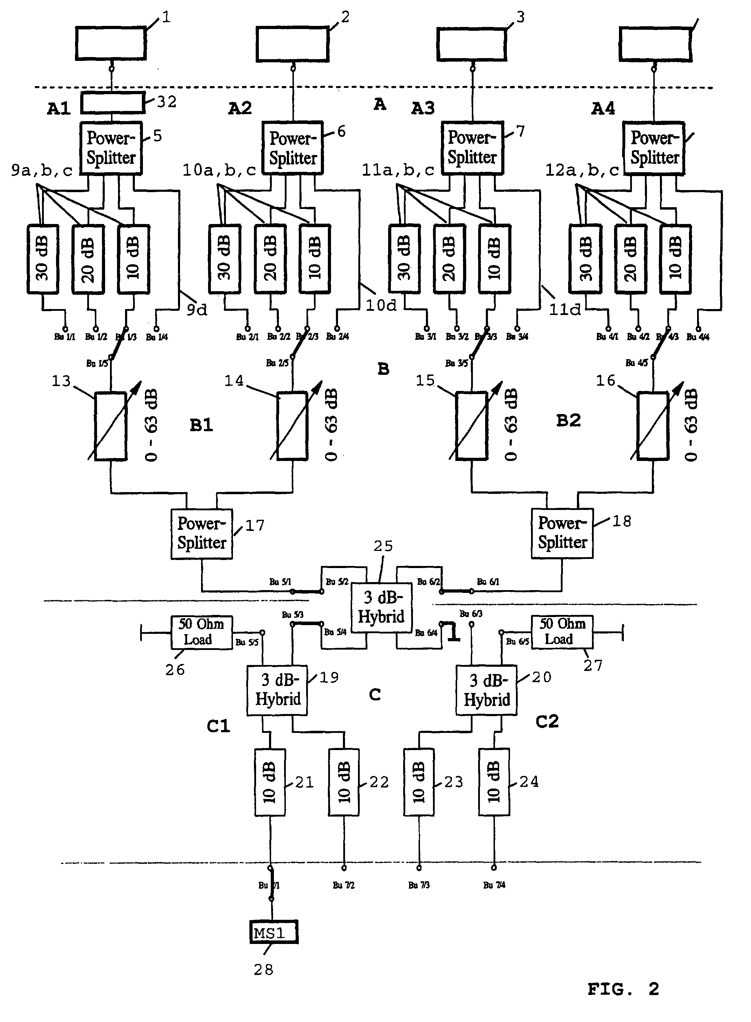

Figur 2 beschreibt ein Anwendungsbeispiel des erfindungsgemäßen Koppelfeldes, wobei das Koppelfeld gemäß Figur 1 für eine Testverbindung zwischen einem Mobilfunkendgerät 28 und vier Basisstationen 1-4 verdrahtet ist. Mit dieser Verschaltung lässt sich zum Beispiel das Handoververhalten des Mobilfunkendgeräts 28 testen.

Die Basisstationen 1-4 sind an jeweils einem Koppelmodul A1-A4 angeschlossen, wobei die 10 dB Ausgänge 1/3, 2/3, 3/3 und 4/3 der Koppelmodule A1-A4 mit den Eingängen 1/5-4/5 der Koppelmodule B 1 und B2 verbunden sind. Die Ausgänge 5/1 und 6/1 der Koppelmodule B1 und B2 sind mit den Eingängen 5/2 und 6/2 des Hybrids 25 verbunden, dessen einer Ausgang 5/4 auf den Eingang 5/3 des Koppelmoduls C1 geführt wird. Koppelmodul C2 bleibt unbenutzt. An einem Ausgang 7/1 des Koppelmoduls C1 ist das Mobilfunkendgerät 28 angeschlossen.

Durch Verändern der Signalpegel der Basisstationen 1-4 mit Hilfe der Stufenabschwächer 13-16 der Koppelstufen B1 und B2 lässt sich eine Bewegung des Mobilfunkendgeräts 28, d.h. eine Änderung der Entfernung zu den Basisstationen 1-4, simulieren und so das Handoververhalten des Mobilfunkendgerätes 28 testen. Ferner lässt sich z.B. eine Basisstation als Störsender "mißbrauchen", um Störungen durch Interferenzen zu simulieren.

Um die erforderliche Meßdynamik günstig zu realisieren, beinhaltet das Koppelfeld in der ersten Koppelstufe für die einzelnen HF-Pfade die oben beschriebene vom Benutzer wählbare Vordämpfung in 10 dB-Stufen (0dB, 10dB, 20dB, 30dB), die zur Anpassung des gesamten Pfaddämpfungsbereiches dient. In dieser Ausführung muß der Benutzer des HF-Koppelfeldes Kenntnis über die Sendeleistungspegel der angeschlossenen BTSn besitzen, um den Regel-bereich der Dämpfungssteller des HF-Koppelfeldes optimal nutzen zu können. Das macht im Normalfall, wenn zwischen Prüfling und Testort eine nicht genau bekannte HF-Dämpfung vorhanden ist, eine Pegelmessung der Sendeleistungspegel der angeschlossenen BTSn mit Hilfe von Power-Metern oder Spektrumsanalysatoren notwendig.

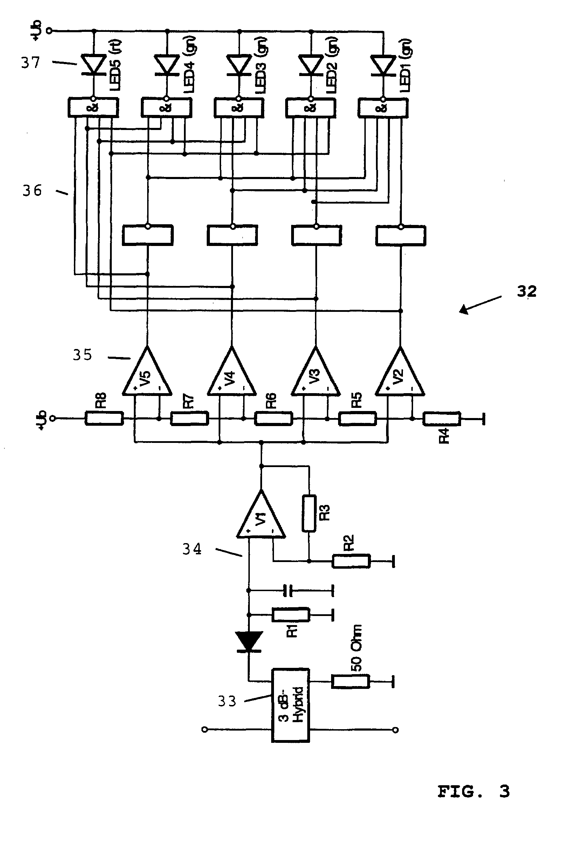

In einer Weiterbildung der Erfindung gemäß Figur 1 und insbesondere Figur 3 ist nun vorgesehen, daß jeweils eine Signalpegelanzeigeeinrichtung 32 in die Signalleitungen zwischen den Basisstationen 1-4 und den Leistungsteilern 5-8 geschaltet ist. Genauso gut könnten die Signalpegeleinrichtungen 32 an den ungedämpften Ausgängen Bu 1/4, Bu 2/4 usw. der ersten Koppelstufe angeordnet werden.

Mit Hilfe dieser Singalpegelanzeigeeinrichtungen 32 wird dem Benutzer des HF-Koppelfeldes auf einfache und ökonomisch günstige Art einen Hinweis über die optimale einzustellende Vordämpfung der einzelnen Dämpfungspfade gegeben.

Wie Figur 3 zeigt, wird im HF-Koppelfeld z.B. an den Eingang eines jeden Dämpfungspfades über einen Koppler 33 (vorzugsweise ein 3dB-Hybrid), der zwischen dem jeweiligen BTS-Anschluß 1-4 und dem nachfolgenden Power-Splitter 5-8 eingefügt wird ein breitbandiger HF-Gleichrichter 34 zur Leistungsmessung angeschlossen. Die Ausgangsspannung dieses HF-Gleichrichters 34 wird mittels einer Komparatorschaltung 35 und einer nachfolgenden Treiberschaltung 36 zur Ansteuerung von z.B. LEDs 37 derart ausgewertet, daß eine Anzeige mittels der LEDs in der folgenden Art erfolgt :

LED 5 (z.B. Farbe rot) leuchtet, wenn die am HF-Koppelfeld angelegte Eingangsleistung zu hoch ist (Übersteuerung). Das ist der Hinweis für den Benutzer, für diesen Pfad ein externes (Zusatz)-Dämpfungsglied einzufügen.

Jedem der eingebauten Vordämpfungsglieder z.B. 9a, 9b, 9c bzw. jedem Ausgang Bu 1/1, Bu 1/2, usw. wird in jedem Dämpfungspfad eine LED zugeordnet (z.B. grün), deren Aufleuchten dem Benutzer bei Ansteuerung der Eingänge BTSx des HF-Koppelfeldes mit Signalen unterhalb der Übersteuerungsgrenze anzeigt, welcher Ausgang der Koppelmodule Ax mit dem jeweiligen Eingang Bu 1/5 - Bu 4/5 der Koppelmodule Bx zu verbinden sind, um den optimalen Dynamikbereich des Koppelfeldes zu erzielen.
Hierbei wird LED1 der Vordämpfung 0dB, LED2 der Vordämpfung 10dB, LED3 der Vordämpfung 20dB und LED4 der Vordämpfung 30dB zugeordnet.

Das erfindungsgemäße Koppelfeld lässt sich auf vielfältige Weise einsetzen und ist dabei sehr einfach auf verschiedenste Testszenarien einzurichten.

### Zeichnungslegende

- A: Koppelstufe
- A1: Koppelmodul
- A2: Koppelmodul
- A3: Koppelmodul
- A4: Koppelmodul
- B: Koppelstufe
- B1: Koppelmodul
- B2: Koppelmodul
- C: Koppelstufe
- C1: Koppelmodul
- C2: Koppelmodul

- 1-4: Sende-/Empfangsgerät
- 5-8: Leistungsteiler
- 9-12: Abschwächer
- 13-16: Abschwächer variabel
- 17,18: Leistungsteiler
- 19,20: Hybridkoppler
- 21-24: Abschwächer
- 25: Hybridkoppler
- 26,27: Leitungsabschluß
- 28-31: Sende-/Empfangsgerät
- 32: Signalpegelanzeigeeinrichtung
- 33: HF-Koppler
- 34: HF-Gleichrichter
- 35: Komparatorschaltung
- 36: Treiberschaltung
- 37: LEDs

## Patentansprüche

1. Koppelfeld zur Vermittlung wenigstens eines Hochfrequenzsignals zwischen wenigstens einem Sende-/Empfangsgerät (1-4) und wenigstens einem weiteren Sende-/Empfangsgerät (28-31), umfassend:
eine erste Koppelstufe (A) mit wenigstens zwei gleichartigen Koppelmodulen (A1-A4) zum Anschluß wenigstens eines Sende-/Empfangsgeräts (1-4), wobei die Koppelmodule (A1-A4) jeweils einen Leistungsteiler (5-8) und wenigstens einen festen oder variablen Signalabschwächer (9-12) und Ausgänge (1/1-1/4) aufweisen, an denen das ungedämpfte Eingangssignal und wenigstens ein abgeschwächtes Eingangssignal zur Verfügung steht,
eine zweite Koppelstufe (B) mit wenigstens einem Koppelmodul (B1; B2), welches wenigstens zwei Eingänge (Bu 1/5; Bu 2/5) mit jeweils einem nachgeschalteten Stufenabschwächer (13-16) und einen Leistungsteiler (17; 18) aufweist, der die Ausgänge der Stufenabschwächer zu einem gemeinsamen Ausgangssignal (Bu 5/1) zusammenfasst, und
eine dritte Koppelstufe (C) mit wenigstens einem Koppelmodul (C1; C2), welches einen Vierpol-Hybridkoppler (19; 20) mit zwei Eingängen (Bu 5/3, Bu 5/5) und zwei Ausgängen umfasst, wobei die Ausgänge (Bu 7/1, Bu 7/2) vorgeschaltete Abschwächer (21-24) aufweisen und wobei an den Ausgängen mindestens das weitere Sende-/Empfangsgerät (28-31) anschließbar ist, **dadurch gekennzeichnet, dass**
die Eingänge der zweiten und dritten Koppelstufe (B; C) über Steckbrücken und/oder Verbindungskabel mit den Ausgängen der ersten und zweiten Koppelstufe (A; B) beliebig verbindbar sind.

2. Koppelfeld nach Anspruch 1, **dadurch gekennzeichnet, daß** es einen weiteren Vierpol-Hybridkoppler mit zwei Eingängen (Bu 5/2; Bu 6/2) und zwei Ausgängen (Bu 5/4; Bu 6/4) umfasst, wobei die Ausgänge der zweiten Koppelstufe (B) über den Hybridkoppler mit den Eingängen der dritten Koppelstufe (C) beliebig verbindbar sind.

3. Koppelfeld nach Anspruch 1 oder 2, **dadurch gekennzeichnet, daß** der Stufenabschwächer (13-16) aus Halbleiterbauelementen besteht.

4. Koppelfeld nach einem der Ansprüche 1 bis 3, **dadurch gekennzeichnet, daß** es für einen Frequenzbereich von 800-2500 MHz ausgelegt ist.

5. Koppelfeld nach einem der Ansprüche 1 bis 4, **dadurch gekennzeichnet, daß** an den Eingängen oder ungedämpften Ausgängen (Bu 1/4, Bu 2/4, ...) der ersten Koppelstufe Signalpegelanzeigeeinrichtungen (32) angeordnet sind.

6. Koppelfeld nach Anspruch 5, **dadurch gekennzeichnet, daß** die Signalpegelanzeigeeinrichtungen (32) optische Anzeigeelemente (37) zur Anzeige eines oder mehrerer unterschiedlicher Signalpegel umfassen.

7. Koppelfeld nach einem der Ansprüche 1 bis 6, **dadurch gekennzeichnet, dass** jedem Ausgang (Bu 1/1, Bu 1/2, Bu 1/3, ...) der ersten Koppelstufe ein optisches Signalpegelanzeigeelement (37) zugeordnet ist.

8. Koppelfeld nach einem der Ansprüche 1 bis 7, **dadurch gekennzeichnet, daß** den Eingangen der ersten Koppelstufe optische Signalpegelanzeigeelemente (37) zugeordnet sind.

9. Koppelfeld nach einem der Ansprüche 1 bis 8, **dadurch gekennzeichnet, daß** die Koppelmodule (A, B, C) in einem gemeinsamen transportablen Gehäuse untergebracht sind.

10. Koppelfeld nach Anspruch 9, **dadurch gekennzeichnet, daß** die Dämpfungswerte der Stufenabschwächer (13-16) direkt über ein am Gehäuse angebrachtes Tastenfeld einstellbar und/oder stufenweise veränderbar sind.

11. Koppelfeld nach einem der Ansprüche 9 bis 10, **dadurch gekennzeichnet, daß** die Eingänge und Ausgänge der Koppelmodule (A, B, C) auf an der Front - und/oder Rückwand des Gehäuses angeordnete Verbindungsbuchsen geführt sind.

## Claims

1. Coupling field for switching at least one highfrequency signal between at least one transmitting/ receiving device (1-4) and at least one further transmitting/receiving device (28-31), including:
a first coupling stage (A) with at least two identical coupling modules (A1-A4) for the connection of at least one transmitting/receiving device (1-4), wherein the coupling modules (A1-A4) have in each case a power divider (5-8) and at least one fixed or variable signal attenuator (9-12) and outputs (1/1-1/4) at which the undamped input signal and at least one attenuated input signal are available,
a second coupling stage (B) with at least one coupling module (B1; B2) which has at least two inputs (Bu 1/5; Bu 2/5) each with a subsequent step attenuator (13-16), and a power divider (17; 18) which combines the outputs of the step attenuators into a common output signal (Bu 5/1), and
a third coupling stage (C) with at least one coupling module (C1; C2) which has a quadripolar hybrid coupler (19; 20) with two inputs (Bu 5/3, Bu 5/5) and two outputs, wherein the outputs (Bu 7/1, Bu 7/2) have preceding attenuators (21-24) and wherein at least the further transmitting/receiving device (28-31) is connectable to the outputs,
**characterised in that** the inputs of the second and third coupling stages (B; C) are connectable as desired via jumpers and/or connecting cables to the outputs of the first and second coupling stages (A; B).

2. Coupling field according to claim 1, **characterised in that** it includes a further quadripolar hybrid coupler with two inputs (Bu 5/2; Bu 6/2) and two outputs (Bu 5/4; Bu 6/4), wherein the outputs of the second coupling stage (B) are connectable as desired via the hybrid coupler to the inputs of the third coupling stage (C).

3. Coupling field according to claim 1 or 2, **characterised in that** the step attenuator (13-16) consists of semiconductor components.

4. Coupling field according to one of claims 1 to 3, **characterised in that** it is designed for a frequency range of 800-2500 MHz.

5. Coupling field according to one of claims 1 to 4, **characterised in that** signal level indicating devices (32) are arranged at the inputs or undamped outputs (Bu 1/4, Bu 2/4, ...) of the first coupling stage.

6. Coupling field according to claim 5, **characterised in that** the signal level indicating devices (32) include optical indicating elements (37) for the indication of one or more different signal levels.

7. Coupling field according to one of claims 1 to 6, **characterised in that** each output (Bu 1/1, Bu 1/2, Bu 1/3, ...) of the first coupling stage is assigned an optical signal level indicating element (37).

8. Coupling field according to one of claims 1 to 7, **characterised in that** the inputs of the first coupling stage are assigned optical signal level indicating elements (37).

9. Coupling field according to one of claims 1 to 8, **characterised in that** the coupling modules (A, B, C) are accommodated in a common transportable housing.

10. Coupling field according to claim 9, **characterised in that** the attenuation values of the step attenuators (13-16) are variable stepwise and/or adjustable directly via a keypad mounted on the housing.

11. Coupling field according to one of claims 9 to 10, **characterised in that** the inputs and outputs of the coupling modules (A, B, C) are conducted on connecting sockets arranged on the front and/or rear wall of the housing.

## Revendications

1. Réseau de connexion pour transmettre au moins un signal à haute fréquence entre au moins un émetteur/ récepteur (1-4) et au moins un autre émetteur/récepteur (28-31), comprenant :
- un premier étage de connexion (A) avec au moins deux modules de connexion de même type (A1-A4) pour le raccordement d'au moins un émetteur/récepteur (1-4), les modules de connexion (A1-A4) ayant chacun un diviseur de puissance (5-8), au moins un affaiblisseur de signaux fixe ou variable (9-12) et des sorties (1/1-1/4) au niveau desquelles le signal d'entrée non amorti et au moins un signal d'entrée affaibli sont disponibles,
- un deuxième étage de connexion (B) pourvu d'au moins un module de connexion (B1 ; B2) qui a au moins deux entrées (Bu 1/5 ; Bu 2/5) avec chacune un affaiblisseur d'étage (13-16) monté en aval, et un diviseur de puissance (17 ; 18) qui réunit les sorties des affaiblisseurs d'étage en un signal de sortie commun (Bu 5/1), et
- un troisième étage de connexion (C) avec au moins un module de connexion (C1 ; C2) qui comprend un coupleur hybride quadripolaire (19 ; 20) avec deux entrées (Bu 5/3, Bu 5/5) et deux sorties, les sorties (Bu 7/1, Bu 7/2) comportant des affaiblisseurs (21-24) montés en amont et au moins l'autre émetteur/récepteur (28-31) étant apte à être raccordé aux sorties,
**caractérisé en ce que**
- les entrées des deuxième et troisième étages de connexion (B ; C) sont aptes à être reliées à volonté aux sorties des premier et deuxième étages de connexion (A ; B) par l'intermédiaire de jarretières et/ou de câbles de liaison.

2. Réseau de connexion selon la revendication 1, **caractérisé en ce qu'**il comprend un autre coupleur hybride quadripolaire avec deux entrées (Bu 5/2 ; Bu 6/2) et deux sorties (Bu 5/4 ; Bu 6/4), les sorties du deuxième étage de connexion (B) étant aptes à être reliées à volonté aux entrées du troisième étage de connexion (C) par l'intermédiaire du coupleur hybride.

3. Réseau de connexion selon la revendication 1 ou 2, **caractérisé en ce que** l'affaiblisseur d'étage (13-16) se compose de composants semi-conducteurs.

4. Réseau de connexion selon l'une des revendications 1 à 3, **caractérisé en ce qu'**il est conçu pour une zone de fréquence de 800-2500 MHz.

5. Réseau de connexion selon l'une des revendications 1 à 4, **caractérisé en ce que** des dispositifs d'affichage de niveau de signaux (32) sont disposés aux entrées ou aux sorties non amorties (Bu 1/4, Bu 2/4,...) du premier étage de connexion.

6. Réseau de connexion selon la revendication 5, **caractérisé en ce que** les dispositifs d'affichage de niveau de signaux (32) comprennent des éléments d'affichage optiques (37) pour l'affichage d'un ou plusieurs niveaux de signaux différents.

7. Réseau de connexion selon l'une des revendications 1 à 6, **caractérisé en ce qu'**un élément d'affichage optique de niveau de signaux (37) est associé à chaque sortie (Bu 1/1, Bu 1/2, Bu 1/3,...) du premier étage de connexion.

8. Réseau de connexion selon l'une des revendications 1 à 7, **caractérisé en ce que** des éléments d'affichage optiques de niveau de signaux (37) sont associés aux sorties du premier étage de connexion.

9. Réseau de connexion selon l'une des revendications 1 à 8, **caractérisé en ce que** les modules de connexion (A, B, C) sont logés dans un boîtier transportable commun.

10. Réseau de connexion selon la revendication 9, **caractérisé en ce que** les valeurs d'affaiblissement des affaiblisseurs d'étages (13-16) sont aptes à être réglées directement par l'intermédiaire d'un clavier monté sur le boîtier et/ou à être modifiées progressivement.

11. Réseau de connexion selon l'une des revendications 9 à 10, **caractérisé en ce que** les entrées et les sorties des modules de connexion (A, B, C) sont reliées à des douilles qui sont disposées sur la paroi avant et/ou arrière du boîtier.
